# EUROPEAN PATENT APPLICATION

(11) **EP 4 151 096 A1**
(43) Date of publication of application: **22.03.2023**
(21) Application number: 21306273.0
(22) Date of filing: 15.09.2021
(51) Int. Cl.: A23L 13/40, A23L 29/212

(54) **USE OF PEA STARCH AND ITS CROSS LINKED DERIVATIVES TO IMPROVE THE TEXTURE OF MEAT PRODUCTS AND MEAT ANALOGUES**

(71) Applicant: ROQUETTE FRERES, 62136 Lestrem (FR)
(72) Inventor: ITO, GOICHI, TOKYO, 184-0014 (JP); MINOURA, Sayaka, TOKYO (JP)
(74) Representative: Plasseraud IP

(57) **Abstract**

The present invention is relative to the use of native or cross-linked leguminous starches as food texture improver for meat products or free meat products.

## Description

The present invention relates to the use of native pea starch or cross-linked pea starch as food texture improver. More particularly, it concerns the improvement of the hardness of "meat products" and "meat analogues".

### State of the art

The invention relates to the improvement of the texture of "meat products" and "meat analogues".

In the case of "meat products", which are produced by minced meat and are normally a mixture of red meat and fat, the man skilled in the art knows that the ratio of red meat and fat is important for texture for consumers, and to the cost for producers.

If the fat content in minced meat is high, the hardness of final product will be reduced, and the cost will be decreased as well.

On the other hand, if the fat content in minced meat is low, the hardness of the final product will be increased, which means delicious, and cost will be increased as well. Therefore, the fat content ratio is an important control point for balancing texture and cost of the products.

To make meat products, such as meat balls and hamburger steaks, it is commonly used native starch as a sub-ingredient as a binder that can hold the water inside of the meat. Moreover, the addition of starch also reduces the cost of the products, as the proportion of meat part will be relatively reduced.

Therefore, adding starch as much as possible is good for end product producers. However, if the starch dosage is too high, it decreases the hardness of the end product, and increases its stickiness.

"Meat analogue" or 'meat-free products" means a food made from vegetarian ingredients, excluding the use of animal meat, and sometimes also excluding the use of derived animal products such as dairy products. Many analogues are soy-based (e.g. tofu, tempeh) or gluten-based, but now may also be pea protein-based. The market for meat analogues includes vegetarians, vegans, non-vegetarians seeking to reduce their meat consumption, and people following religious dietary laws.

It is generally agreed that the protein structure is by far the most determining factor in influencing the texture and mouthfeel of the meat analogue product. Most new product development efforts are aimed at further improving the texturization of vegetable proteins. However, meat analogs may contain other ingredients such as fat and fibers and need the presence of binding agent that provides a bound structure and allows the other components to form a cohesive mass, in particular the binding agent helps to include the fat, water and proteins in the product. A plethora of suitable food binding agents are known in the art. Typically, several binding agents are used in combination to form a bound structure in the complete product.

In the meat analogue, the binding agent(s) are selected from starch, gluten, puree, starches, gums, and polysaccharides, as for example described in international patent application WO 2021/098966.

Popular binding agents known in the art comprise bean puree, potato puree, potato starch, corn starch, tapioca starch, pea starch, wheat gluten, corn gluten, rice gluten, xanthan gum, guar gum, locust bean gum, gellan gum, Arabic gum, methylcellulose, hydroxypropyl methylcellulose, carboxymethyl cellulose, maltodextrin, and carrageenan. So, in all these applications, starch is considered only as a binding agent, to be used in moderate concentration in the recipe, to avoid side effects like stickiness.

Other working groups in this technical field propose solutions to replace fats with chemically modified starch.

Fat provides nutrients to the human body, but excessive intake of fats can cause diseases such as obesity, hypertension, coronary heart disease and the like.

Fat is the main energy source in food, it can provide 9 kcal/g of energy, while protein and carbohydrate provide 4 kcal/g of energy.

The American dietary guidelines recommend that the daily caloric source of each individual should not exceed 30% fat and not more than 10% saturated fat.

Therefore, many countries are working on the fat substitutes.

Fat substitutes are a class of substances that are added to food products to replace fat so that they have a similar or identical organoleptic effect as full fat food products of the same type, but with a reduced total number of calories.

The fat substitute must have the properties of a partial or whole fat, be able to generate less calorie, be stable, colorless and tasteless, have no adverse reaction with other components when added to a food, not be absorbed or incompletely absorbed in the metabolic process and generate zero calorie or low calorie.

Among the most common fat substitutes, are dextrins and modified starches, which combine with water to form a gel having a three-dimensional network that entraps a large amount of water, which has a fluidity and a fat-like texture and mouthfeel.

The fat substitute must also have the property of spreading, and exhibit the pseudoplasticity of fat. It must be smooth and sticky like fat, and the taste must stay in the oral cavity as long as the fat stays.

For example, CN 112314937 teaches how to prepare the best fat substitute by using corn, wheat or pea starches as raw materials, without influencing the sensory characteristics of food. The chemically modification of starch that are claimed in this patent application are cross-linking following by two esterification steps.

In the technical field of the production of food preparations based on meat or meat analogues, there is a need for ingredients which ensure a satisfactory texture and organoleptic quality for the consumer.

Indeed, depending on the composition of these preparations, the softness and juiciness of the food product when chewed may be altered, and a sticky aspect or other unnatural texture attributes may be produced.

This makes it difficult to produce a processed meat or meat analogue food product with the necessary consistency (in terms of hardness and firmness).

For this reason, compounds such as hydrocolloids like xanthan gums, carrageenans... are often added.

From all of the above, and from the general knowledge of the skilled person in the art, it is understood that starch is not the best candidate.

Indeed, starch is commonly used as binder (see also the teaching of US 10 477 882 and JP 2008011727), or fat substitute, but never considered "as such" to have functional properties in preparations intended for the processed meats, such as texture improver. To the best of his knowledge, the Applicant has just found mention of the role of starch as a texture improver in foods, but the starch is used in combination with oil and/ or fats. In other words only the use of oil-and-fat modified starch seems to be disclosed (see the teaching of WO 2020/218055 and EP 3858147).

However, the Applicant has found that leguminous starch, such as pea starch or its cross-linked derivatives, more particularly phosphate reticulated pea starch, contrary to the opinion of the man skilled in the art, can maintain and in some cases increase the hardness of the meat or free-meat products, compared to other starches.

Moreover, it has been found that products prepared from this type of pea starch does not develop stickiness, unlike other starches.

The use of pea starch or cross-linked starch in such products results in an end product with a harder texture than the product made with starches from other botanical sources. Moreover, the texture is similar to that of the product made with a higher ratio, a higher proportion of red meat. So, pea starch or its cross-linked derivatives can advantageously mimic the more expensive ingredient usually used for this purpose.

### Summary of the invention

The invention relates to the use of native or cross-linked leguminous starches as food texture improver for meat products or free meat products.

The leguminous starch is chosen from the group consisting of pea starch, fava bean starch, haricot bean starch, broad bean starch, and horse bean starch, more preferably is pea or faba bean starch.

Whatever the application, *i.e.* processed meat or meat analogue, native pea starch can be used to maintain and even increase the hardness of the end product, compared to starches from other botanical sources.

The cross-linked pea starch is particularly advantageous for the preparation of meat products that might during cooking be subjected to high temperatures. Typically if during cooking the meat product exceeds 80°C it is preferable that the product comprises cross-linked pea starch rather than native pea starch.

In any case, higher the modification, the harder the texture of the product (meat processed or meat analogue) containing this starch.

The cross-linked starch is preferably a high cross-linked starch, more preferably is distarch phosphate. This high cross-linked starch has preferably a phosphorus content of between 130 to 150 mg per kg of crude starch.

The amount of pea starch or cross-linked pea starch represents between 1 % to 25%, preferably between 3 to 12%, for example 5% of the total weight of the final product (either the meat product or the meat free product)

### Figures:

Figure 1: Peak hardness of final products; addition of starch to a premix meat preparation.
Figure 2: Hardness of hamburger steak by using different types of starch; Addition of starch to reconstituted recipe.
Figure 3: Hardness of hamburger steak by using different types of starch Addition of starch to reconstituted recipe; Addition of starch to reconstituted recipe; study of the Impact of different types of starch of pea starch on hamburger steak when the ratio "red meat" to "fat" varies.
Figure 4: Hardness of hamburger steaks with different types of starch Addition of starch to reconstituted recipe; study of the Impact of different types of starch (pea versus tapioca) on hamburger steak when the ratio "red meat" to "fat" varies.
Figure 5: Hardness of hamburger steak with different starches and at different heating conditions (different length of baking condition).
Figure 6: Hardness of hamburger steak with different pea starches and at different heating conditions (different length of baking condition); study of the change of texture of the hamburger steaks under different baking conditions.
Figure 7: Hardness of hamburger steak with different pea starches and different heating conditions (different temperatures at the center of the product); study of the change of texture of the hamburger steaks under different baking conditions.
Figure 8: Hardness of hamburger steak with different amounts of pea starch.
Figure 9: Hardness of a meat free patty with different types of starch.
Figure 10: Hardness of a meat free patty with different types of starch.
Figure 11: Hardness of a meat free patty; study of the impact of the modification level and the water content of the patty.
Figure 12: Yield rate (Ratio (weight after cooking)/ (weight before cooking) of meat analogue with different types of starch; baking using a steam oven.
Figure 13: Hardness of a meat free patty with a high acetylated pea starch; study of the impact of the amount of starch.
Figure 14: Hardness of a meat free patty with a low acetylated pea starch; study of the impact of the amount of starch.
Figure 15: Hardness of a meat free patty with a low acetylated pea starch; study of the impact of the amount of starch.
Figure 16: Hardness of a meat free patty with a high cross-linked pea starch; study of the impact of the amount of starch.
Figure 17: Hardness of a meat free patty with a low cross-linked potato starch; study of the impact of the amount of starch.
Figure 18: Hardness of a meat free patty; study of the impact of the nature of the starch and the nature of the amount.

### Detailed description of the invention

The invention relates to the use of native or cross-linked leguminous starches as food texture improver for meat products or free meat products.

The Applicant has found that native pea starch and cross-linked pea starch can be advantageously used for the preparation of meat products and meat analogues.

As mentioned above "meat products" means products produced by minced meat and are normally a mixture of red meat and fat and "meat free products" means" or "meat meat-free products" means a food made from vegetarian ingredients, excluding the use of animal meat and sometimes also exclude excluding the use of derived animal products such as dairy products. Many analogues are soy-based (e.g. tofu, tempeh) or gluten-based, but now may also be pea protein-based.

### Use of native leguminous starch

By "legume" for the purposes of the present invention, is understood to mean any plant belonging to the families, *Mimosaceae* or *Papilionaceae* of and in particular any plant belonging to the family of *Papilionaceae,* for example, the pea, haricot bean, broad bean, horse bean, lentil, alfalfa, clover, or lupine.

This definition includes in particular all the plants described in any one of the Tables contained in the article by R. HOOVER et al. entitled "Composition, Structure, Functionality and Chemical Modification of Legume Starches: a review" (Can. J. Physiol. Pharmacol. 1991.69 pp. 79-92).

Preferably the starch useful for the present invention is a native leguminous starch. Preferably, the legume is selected from the group consisting of pea, fava bean, haricot bean, broad bean, and horse bean, more preferably pea or faba bean. Advantageously, it is pea, the term "pea" being considered here in its broadest sense and including in particular:
- all the wild varieties of "Smooth PEA", and
- all the mutant varieties of "smooth pea" and of "wrinkled pea" ("wrinkled PEA") and this, regardless of the uses to which said varieties are generally intended (human consumption, animal nutrition and/or other uses).

Said mutant varieties are especially those referred to as "r is mutants", "Rb mutants", "rug 3 mutants", "rug mutants 4", "rug mutants 5" and "LAM mutants" as described in the article by The C-liter HEYDLEY et al. entitled "Developing novel pea wrinkled pea" Proceedings of the isgri Symposium of the Industrial Biochemistry and Biotechnology Group of the Biochemical Society, 1996, pp. 77-87.

According to another advantageous variant, the legume is a plant, for example a variety of pea or of horse bean, giving seeds comprising at least 25%, preferably at least 40%, by weight of starch (dry/dry).

The expression "Legume starch" is understood to mean any composition extracted and this, of case in whatever way, from a legume and in particular from a *Papilionaceae,* and whose starch content is greater than 40%, preferably greater than 50% and even more preferably greater than 75%, these percentages being expressed as dry weight relative to the dry weight of said composition.

Advantageously, this starch content is greater than 90% (dry/dry). It may in particular be greater than 95%, including greater than 98%.

The term "native" starch is understood to mean a starch which has not undergone any chemical modification.

### Use of cross-linked starch

Because native pea starches have poor functional properties such as low shear and acid resistance, low thermal stability and high retrogradation tendency, it is known that modification of pea starches is necessary to tailor their specific functional properties, such as a desirable resistance to digestion, in order to develop new functional food ingredients and functional foods.

Starch modification is a classical means of altering the structure of starch, and generally exerting a major change on a desirable physical property.

Nevertheless, even low levels of modification are capable of significantly altering the physical properties of starch, such as paste viscosity, gelling, syneresis, clarity, adhesion and emulsifying properties.

Cross-linked starches offer acid, heat and shear stability compared to the native starches from which they are derived.

Starch stabilization aims, for example, to prevent retrogradation by introducing substituent groups. The interactions of the glucan chains in the starch granule are weakened by the introduction of the substituents and, consequently, hydration and gelatinization of starch by cooking are achievable at lower temperatures.

The effectiveness of stabilization depends on the number and nature of the substituent groups. Acetylation and hydroxypropylation are the main types of stabilization for foods. The starch useful for the present invention is typically a phosphate cross-linked starch.

### Phosphate Cross-linking of starch

Cross-linking modifications generally use multifunctional reagents to form either ether or ester intermolecular or intramolecular cross-links between the hydroxyl groups of adjacent starch chains.

Sodium trimetaphosphate (STMP), sodium tripolyphosphate (STPP), phosphoryl chloride (phosphorus oxychloride: POCl3), epichlorohydrin (EPI), and mixed adipic-acetic anhydride are the common agents employed to produce cross-linked starches. Optimal reactive conditions and schemes vary according to reagent type.

For reactions with STMP and/or STPP, the starch is typically impregnated with both the reagent and the catalytic base in an aqueous slurry of granules.

The most commonly used food-grade cross-linking reagent for starch is 99:1 (w/w) STMP/STPP due to its high phosphorylating efficiency.

The phosphorus content for food-grade modified starch is regulated by the Code of Federal Regulation (CFR, 2001) of the U.S. Food and Drug Administration or by the Directive of the EEC (2000). If STMP/STPP is used to phosphorylate starch for food use, the modified starch cannot contain more than 0.4% phosphorus.

Based on the phosphorus content, the degree of substitution (DS) for phosphate monoester and phosphate diester can be calculated accordingly.

The phosphorus content in cross-linked starched can also be determined by Energy Dispersive X-ray Fluorescence Spectrometry (EDXRF) and Inductively Coupled Plasma-Optical Emission Spectrometry (ICP-OES).

"High cross-linked starch" for the purposes of the present invention means a cross-linked starch produced classically (for example starch slurry treated with 0.6 % w/w STMP) so that its phosphorus content is 130 mg to 150 mg per kg of crude starch. Its gelatinized temperature is typically 95°C.

"Low cross-linked starch" means a cross-linked pea starch, produced classically (for example starch slurry treated with 0.0385 % w/w STMP) so that its phosphorus content is 5 mg to 10 mg per kg of crude starch. Its gelatinized temperature is typically 75.4°C. The starch useful for the present invention is advantageously a phosphate distarch. Meat products and meat analogues with either native Pea starch or cross-linked pea starch (such as CLEARAM^{®} LI4000 commercialized by the applicant for example) show significantly harder texture than similar products with native or modified starches from other botanical sources (such as potato starch or tapioca starch) or even with acetylated pea starch.

"Acetylated starch" or "acetylated pea starch" for the purposes of the present invention, is understood to mean starch prepared by reacting the starch with acetic anhydride in the presence of diluted sodium hydroxide. Alternatively, vinyl acetate can be used for acetylation in aqueous suspension in the presence of sodium carbonate as catalyst.

It has been found that products prepared from either native pea starch or crosslinked pea starch does not develop stickiness, unlike other starches.

The use of pea starch or cross-linked starch in such products results in a final product with a harder texture than the product made with starches from other botanical sources. Moreover, in the case of meat products, the texture is similar to that of the product made with a higher ratio, a higher proportion of red meat. Pea starch or its cross-linked derivatives can advantageously mimic the more expensive ingredient usually used for this purpose. Therefore, pea starch can provide better texture without changing the cost of the meat product.

In the case of meat products, the applicant has shown that for the product that will be cooked above 81°C, cross-linked pea starch is recommended as a functional ingredient, better than native pea starch.

In the case of meat free product, the applicant has also showed that the use of cross-linked pea starch can improve the texture of a meat free product and can mimic the meat free product, which has been made according to a premium recipe, and in which less water has been used.

The amount of pea starch or cross-linked pea starch represents between 1 % to 25%, preferably between 3 to 12%, for example 5% of the total weight of the final product (either the meat product or the meat free product).

This invention will be better understood in the light of the following examples which are given for illustrative purposes only and do not intend to limit the scope of the invention, which is defined by the attached claims.

### EXAMPLES

### Example 1: Comparison of the properties of native and of chemically modified starches (from various botanical sources) as ingredient of meat products - Addition of starch to a premix meat preparation

Different starches (native and chemically modified) are here added to a commercial hamburger premix.

### Ingredients tested:

- Native potato starch produced by TOYATAKAHASHI.
- Native pea starch commercialized by the Applicant under the name Pea Starch N-735.
- Low acetylated tapioca starch commercialized under the name SAKURA by MATSUTANY company. Its acetyl value is 0.52, its Substitution Degree is 0.020 and its gelatinization temperature is 69.95°C.
- High acetylated pea starch commercialized by the Applicant under the name CLEARAM^{®} LG0020. Its acetyl value is 1.9, its substitution Degree is 0.071 and its gelatinization temperature is 67.9°C.
- Low cross-linked potato starch commercialized by the Applicant under the name CLEARAM^{®} PI10 with a gelatinization temperature of 65.9°C.
- High cross-linked pea starch commercialized by the Applicant under the name CLEARAM^{®} LI 4000, with a gelatinization temperature of 95°C.

### Recipes and process

### Recipes

| | CTR | Native Potato | PI10 | Low Ac Tapioca | Native Pea | LG0020 | LI4000 |
|---|---|---|---|---|---|---|---|
| Hamburger steak premix paste (g) | 300 | 300 | 300 | 300 | 300 | 300 | 300 |
| Native Potato starch (g) | | 16 | | | | | |
| CLEARAM PI10 (g) | | | 16 | | | | |
| Low acetylated tapioca starch (g) | | | | 16 | | | |
| Pea starch N-735 (g) | | | | | 16 | | |
| CLEARAM LG0020 (g) | | | | | | 16 | |
| CLEARAM LI4000 (g) | | | | | | | 16 |
| Total | 300 | 316 | 316 | 316 | 316 | 316 | 316 |

The composition of the hamburger steak premix paste is a classical one, composed of "Beef, Pork, Bread crumb, Dried onion, Salt, Sugar, Hydrolyzed Vegetable protein, Onion powder, Pepper, Whole milk powder, Paprika, Chicken extract, Roast garlic powder, Nutmeg, Roast onion powder, Spice powder, Ginger powder, Whole egg powder, Red pepper, Onion, Trehalose, Seasoning powder, Vitamin C"

Process
- Mix hamburger patty and starch for 1 min.
- Divide the paste into 100 g molds.
- Bake the portion at 200°C for 10 min in a steam convection oven.
- Individually Quick Frozen (IQF): Blast freezer, - 40°C, 1.5 hr.

### Analysis methods

### Yield rate of meat patty

### - After baking

Weight the patty after baking. Calculate yield rate: weight after baking / 100g (weight of before baking) x 100

### - After microwave

Weigh the patty before and after microwave. Calculate yield rate: ratio weight after microwave / weight before microwave

Texture of meat patty (Hardness)

Texture analyzer: Shimadzu EZ-SX

Warm it up in a microwave oven at 500 W for 2 min.

Cut a 2 cm thick hamburger steak patty, put the cross section facing up on the stage, and push it with cylinder chip under the following conditions.

Conditions:
Plunger: 2 cm cylinder chip
Speed: 1 mm/sec, 2 times
Sample size: 2 cm thick hamburger steak [100g/ hamburger steak mold]

### Method of sensory evaluation

### Number of panelists: 3

Evaluate all samples, 7 samples, at one time, and make a conclusion by discussing.

### Analysis results

### Yield rate of patty with each starch

Weight changing before and after baking process.

Weight changing before and after microwave reheated process.

### Yield of baking process

| | | CTR | Native Potato | PI10 | Low Ac Tapioca | Native Pea | LG0020 | LI4000 |
|---|---|---|---|---|---|---|---|---|
| Before baking (g) | | 100 | 100 | 100 | 100 | 100 | 100 | 100 |
| After baking (g) | Trial-1 | 81.09 | 82.9 | 80.7 | 82.6 | 81.5 | 81.6 | 80.5 |
| | Trial-2 | | 83.1 | 80.7 | 82.8 | 79.8 | 81.7 | 80.8 |
| | Trial-3 | | 80.7 | 83.6 | 81.7 | 80.9 | 79.8 | 82.0 |
| | AVERAGE | 81.1 | 82.2 | 81.7 | 82.4 | 80.7 | 81.0 | 81.1 |
| | Error Bar (STD 1σ) | | 1.4 | 1.7 | 0.6 | 0.8 | 1.0 | 0.8 |
| Yield | | 81% | 82% | 82% | 82% | 81% | 81% | 81% |

### Yield of cooking process [microwave machine]

| | CTR | Native Potato | PI10 | Low Ac Tapioca | N735 | LG0020 | LI4000 |
|---|---|---|---|---|---|---|---|
| Before microwave (g) | 82.22 | 82.08 | 79.42 | 81.74 | 79.29 | 80.61 | 81.02 |
| After microwave (g) | 75.66 | 78.85 | 76.32 | 77.75 | 75.06 | 75.87 | 77.89 |
| Yield of cooking process | 92.02% | 96.06% | 96.10% | 95.12% | 94.67% | 94.12% | 96.14% |

### Yield of total process.

| | CTR | Native Potato | PI10 | Low Ac Tapioca | N735 | LG0020 | LI4000 |
|---|---|---|---|---|---|---|---|
| Yield of baking process | 81.1% | 82.2% | 81.7% | 82.4% | 80.7% | 81.0% | 81.1% |
| Yield of cooking process | 92.0% | 96.1% | 96.1% | 95.1% | 94.7% | 94.1% | 96.1% |
| Yield of total process | 74.6% | 79.0% | 78.5% | 78.3% | 76.4% | 76.3% | 78.0% |

There is no significant difference between these different starches.

### Texture of final products (Hardness in Newton (N))

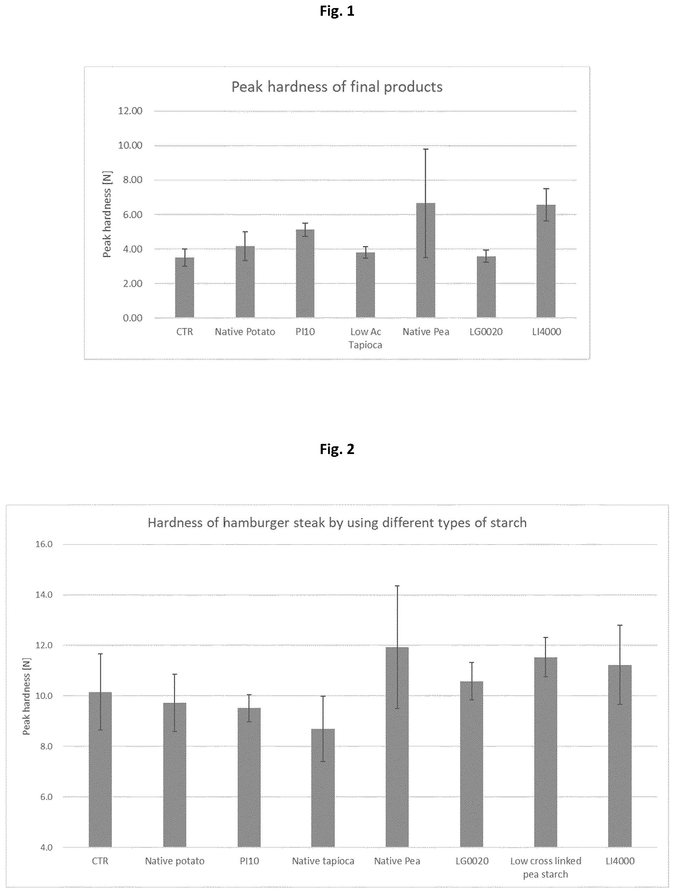

The results are given in the table below and presented in the Fig. 1.

| | CTR | Native Potato | PI10 | Low Ac Tapioca | Native Pea | LG0020 | LI4000 |
|---|---|---|---|---|---|---|---|
| Trial 1 (Newton (N)) | 2.90 | 3.00 | 4.62 | 3.38 | 4.24 | 3.21 | 5.23 |
| Trial 2 (N) | 3.40 | 4.35 | 5.19 | 4.21 | 3.70 | 3.97 | 7.34 |
| Trial 3 (N) | 3.68 | 4.35 | 5.13 | 3.75 | 8.75 | 3.37 | 6.68 |
| Trial 4 (N) | 4.07 | 4.97 | 5.55 | 3.88 | 9.93 | 3.81 | 7.00 |
| Average | 3.51 | 4.17 | 5.12 | 3.81 | 6.66 | 3.59 | 6.56 |
| STD 1σ | 0.49 | 0.83 | 0.38 | 0.34 | 3.14 | 0.36 | 0.93 |

Native Pea starch and CLEARAM^{®} LI4000 show significantly harder texture than other starches tested.

### Sensory evaluation

| | CTR | Native Potato | PI10 | Low Ac Tapioca | Native Pea | LG0020 | LI4000 |
|---|---|---|---|---|---|---|---|
| Comment | | Sticky texture | Bit sticky texture | Sticky texture | Hard texture | Not sticky, but soft | Hard texture |
| Stickiness | - | ++ | + | +++ | - | | - |

Starches other than native and cross-linked pea starches give a weak and sticky texture which is considered a poor texture and decreases the value of the final products.

Therefore, it has been found that pea starch, especially native and cross-linked pea starch, imparts an interesting texture to the meat product.

To increase production yield, the use of starch is a common means in the food industry. However, commonly used starches, such as potato and tapioca starch, result in decreased hardness and increased viscosity of the final product.

It is demonstrated here that the production yield can be optimized without increasing the stickiness of the final product, by using native or cross-linking modified pea starch.

### Example 2: Comparison of the properties of native and of chemically modified starches (from various botanical sources) as ingredient of meat products - Addition of starch to reconstituted recipe

Different starches (native and chemically modified) are here added to a reconstituted based meat recipe.

### Ingredients tested:

- Native potato starch produced by TOYATAKAHASHI.
- Native pea starch commercialized by the Applicant under the name Pea Starch N-735.
- Native tapioca starch produced in Asia by UFC.
- High acetylated pea starch commercialized by the Applicant under the name CLEARAM^{®} LG0020. Its acetyl value is 1.9, its substitution Degree is 0.071 and its gelatinization temperature is 67.9°C.
- Low cross-linked potato starch commercialized by the Applicant under the name CLEARAM^{®} PI10 with a gelatinization temperature of 65.9°C.
- Low cross-linked pea starch, produced classically, from a starch slurry treated with 0.0385% w/w STMP, so that its phosphorus content is 5 mg to 10 mg per kg of crude starch. Its gelatinization temperature is 75.4°C.
- High cross-linked pea starch commercialized by the Applicant under the name CLEARAM^{®} LI 4000, with a gelatinization temperature of 95°C.

### Recipes and process

Recipes to determine the effect of different types of starch (maintaining constant the ratio "red meet" and "fat")

| | | CTR | Native potato | CLEARA M PI10 | Native tapioca | Native Pea | CLEARA M LG0020 | Low cross linked pea starch | CLEARAM LI4000 |
|---|---|---|---|---|---|---|---|---|---|
| Phase A | Minced beef [Red meat] (g) | 142.8 | 142.8 | 142.8 | 142.8 | 142.8 | 142.8 | 142.8 | 142.8 |
| | Minced beef fat (g) | 61.2 | 61.2 | 61.2 | 61.2 | 61.2 | 61.2 | 61.2 | 61.2 |
| | Salt (g) | 1.7 | 1.7 | 1.7 | 1.7 | 1.7 | 1.7 | 1.7 | 1.7 |
| TPP phase | Texturized Pea Proteins (TPP) NUTRALYS T70S commercialized by the Applicant (g) | 42.5 | 42.5 | 42.5 | 42.5 | 42.5 | 42.5 | 42.5 | 42.5 |
| | Water (g) | 93.5 | 93.5 | 93.5 | 93.5 | 93.5 | 93.5 | 93.5 | 93.5 |
| Phase B | Native potato starch (g) | | 20.74 | | | | | | |
| | CLEARAM PI10 (q) | | | 20.74 | | | | | |
| | Native tapioca starch (g) | | | | 20.74 | | | | |
| | Native Pea starch (g) | | | | | 20.74 | | | |
| | CLEARAM LG0020 (g) | | | | | | 20.74 | | |
| | Low cross linked pea starch (g) | | | | | | | 20.74 | |
| | CLEARAM LI4000 (g) | | | | | | | | 20.74 |
| | Bread crumbs (g) | 17 | 17 | 17 | 17 | 17 | 17 | 17 | 17 |
| | Water (g) | 54.74 | 34 | 34 | 34 | 34 | 34 | 34 | 34 |
| Total | | 413.44 | 413.44 | 413.44 | 413.44 | 413.44 | 413.44 | 413.44 | 413.44 |

Recipes to determine the effect of different types of pea starch (native and chemically modified) when the ratio "red meat" to "fat" varies.

| | | CTR [R:F=90:10] | CTR [R:F=80:20] | CTR [R:F=70:30] | Native Pea [R:F=70:30] | Low cross linked pea starch [R:F=70:30] | LI4000 [R:F=70:30] |
|---|---|---|---|---|---|---|---|
| Phase A | Minced beef [Red meat] (g) | 183.6 | 163.2 | 142.8 | 142.8 | 142.8 | 142.8 |
| | Minced beef fat (g) | 20.4 | 40.8 | 61.2 | 61.2 | 61.2 | 61.2 |
| | Salt(g) | 1.7 | 1.7 | 1.7 | 1.7 | 1.7 | 1.7 |
| TPP phase | Texturized Pea Proteins (TPP) NUTRALYS T70S commercialized by the Applicant (g) | 42.5 | 42.5 | 42.5 | 42.5 | 42.5 | 42.5 |
| | Water (g) | 93.5 | 93.5 | 93.5 | 93.5 | 93.5 | 93.5 |
| Phase B | Native Pea starch (g) | | | | 20.74 | | |
| | Low cross linked pea starch (g) | | | | | 20.74 | |
| | CLEARAM LI4000 (g) | | | | | | 20.74 |
| | Bread crumbs (g) | 17 | 17 | 17 | 17 | 17 | 17 |
| | Water (g) | 54.74 | 54.74 | 54.74 | 34 | 34 | 34 |
| Total | | 413.44 | 413.44 | 413.44 | 413.44 | 413.44 | 413.44 |

### Process :

- Rehydrated NUTRALYS^{®} T70S.
- Mix water and NUTRALYS^{®} T70S and store it at RT for 60 min.
- After 60 min, put rehydrated NUTRALYS T70S into ROBOT COUPE, then press the start button for around 40 seconds.
- Making meat patty.
- Mix Phase A, Minced beef and minced beef fat and salt, by using HOBART N-50. Mix at139 rpm for 1.5 min+1.5 min. 3 min total.
- Add Phase B and TPP part and mix at 139 rpm for 5 min.
- Adjust the temperature of the resulting product just after mixing process, to 14°C.
- Separate the product into 100 g portions and mould the portion into the shape of a hamburger steak.
- Bake it with steam convection oven at 180°C, until the temperature of center of hamburger steak is 80°C. Around 10.5 min. 90 % dry condition.
- IQF: Blast freezer, - 40°C, 1.5 hr.

### Analysis methods

Yield rate of meat patty

### - After baking

Weight the patty after baking. Calculate yield rate: weight after baking / 100 g (before baking) x 100

### - After microwave

Weigh the patty before and after microwave. Calculate yield rate: weight after microwave / weight before microwave

Texture of meat patty

Texture analyzer: (Shimadzu EZ-SX)

Warm it up by microwave oven at 500W for 2min.

Put hamburger steak patty on the stage and push it with Tooth shape chip under the following conditions.

Condition:
Plunger: Tooth shape chip
Speed: 1mm/sec, 20mm thickness
Sample size: one hamburger steak [100g/ hamburger steak mould]

### Analysis results

### Impact of different types of starch on hamburger steak

The results are given in the following tables and presented in the Fig. 2

Yield of production process, before and after baking process.

| | CTR | Native potato | PI10 | Native tapioca | Native Pea | LG0020 | Low cross linked pea starch | LI4000 |
|---|---|---|---|---|---|---|---|---|
| Initial (g) | 100.0 | 100.0 | 100.0 | 100.0 | 100.0 | 100.0 | 100.0 | 100.0 |
| Trial-1 (g) | 87.0 | 89.8 | 88.8 | 89.0 | 89.5 | 89.3 | 89.1 | 91.0 |
| Trial-2 (g) | 86.1 | 89.9 | 88.4 | 88.8 | 87.0 | 89.2 | 89.7 | 89.4 |
| Trial-3 (g) | 83.7 | 89.0 | 89.0 | 89.3 | 90.6 | 85.8 | 91.0 | 89.6 |
| Trial-4 (g) | 86.5 | 90.6 | 90.0 | 89.1 | 91.4 | 89.7 | 90.6 | 90.0 |
| Average | 85.8 | 89.8 | 89.1 | 89.0 | 89.6 | 88.5 | 90.1 | 90.0 |
| Ratio | 85.8% | 89.8% | 89.1% | 89.0% | 89.6% | 88.5% | 90.1% | 90.0% |

Yield of cooking process [microwave machine]

| | CTR | Native potato | PI10 | Native tapioca | Native Pea | LG0020 | Low cross linked pea starch | LI4000 |
|---|---|---|---|---|---|---|---|---|
| Initial-1 (g) | 85.7 | 88.3 | 88.5 | 88.6 | 88.4 | 88.7 | 89.1 | 89.0 |
| Microwaved-1 (g) | 81.2 | 84.8 | 84.1 | 84.4 | 84.2 | 85.0 | 85.3 | 85.9 |
| Yield-1 | 94.8% | 96.0% | 95.1% | 95.3% | 95.2% | 95.8% | 95.8% | 96.5% |
| Initial-2 (g) | 82.7 | 90.1 | 89.6 | 88.8 | 88.8 | 88.7 | 90.1 | 89.4 |
| Microwaved-2 (g) | 78.0 | 85.6 | 86.3 | 85.5 | 84.3 | 84.4 | 86.2 | 86.9 |
| Yield-2 | 94.3% | 95.1% | 96.3% | 96.3% | 94.9% | 95.2% | 95.6% | 97.2% |
| Average | 94.6% | 95.6% | 95.7% | 95.8% | 95.1% | 95.5% | 95.7% | 96.9% |

Yield of total process.

| | CTR | Native potato | PI10 | Native tapioca | Native Pea | LG0020 | Low cross linked pea starch | LI4000 |
|---|---|---|---|---|---|---|---|---|
| Yield of production process | 85.8% | 89.8% | 89.1% | 89.0% | 89.6% | 88.5% | 90.1% | 90.0% |
| Yield of cooking process | 94.6% | 95.6% | 95.7% | 95.8% | 95.1% | 95.5% | 95.7% | 96.9% |
| Total yield | 81.2% | 85.8% | 85.2% | 85.3% | 85.2% | 84.5% | 86.2% | 87.2% |

Pea starch and its derivatives show higher gelling property than control and other types of starches. Pea starches have therefore unique character.

Moreover, especially cross-linked Pea starch show better texture.

### Impact of different types of pea starch on hamburger steak when the ratio "red meat" to "fat" varies

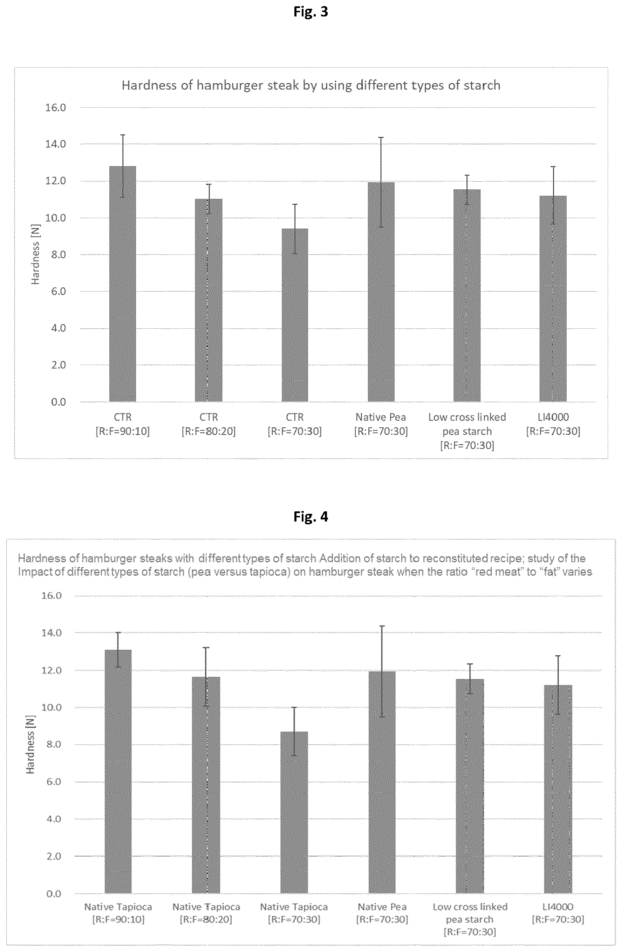

The results of the comparison of the texture of hamburger steak with native and chemically modified starches are given in the following table and presented in the Fig.3 (Hardness)

| | CTR [R:F=90:10] | CTR [R:F=80:20] | CTR [R:F=70:30] | Native Pea [R:F=70:30] | Low cross linked pea starch [R:F=70:30] | LI4000 [R:F=70:30] |
|---|---|---|---|---|---|---|
| Trial-1 (N) | 14.9 | 11.8 | 8.9 | 12.7 | 10.8 | 11.7 |
| Trial-2 (N) | 12.9 | 11.6 | 11.2 | 13.0 | 11.7 | 13.0 |
| Trial-3 (N) | 12.6 | 9.6 | 10.9 | 14.7 | 12.9 | 12.7 |
| Trial-4 (N) | 10.2 | 11.3 | 8.7 | 7.7 | 11.5 | 8.9 |
| Trial-5 (N) | 12.0 | 10.8 | 8.8 | 10.6 | 11.6 | 10.2 |
| Trial-6 (N) | 14.3 | 11.2 | 7.9 | 12.8 | 10.7 | 10.8 |
| Average | 12.8 | 11.0 | 9.4 | 11.9 | 11.5 | 11.2 |
| STD | 1.7 | 0.8 | 1.3 | 2.4 | 0.8 | 1.6 |

The results of the production yield, comparing before and after the baking process, are given in the table below.

| | CTR [R:F=90:10] | CTR [R:F=80:20] | CTR [R:F=70:30] | Native Pea [R:F=70:30] | Low cross linked pea starch [R:F=70:30] | LI4000 [R:F=70:30] |
|---|---|---|---|---|---|---|
| Initial (g) | 100.0 | 100.0 | 100.0 | 100.0 | 100.0 | 100.0 |
| Trial-1 (g) | 89.2 | 91.3 | 87.0 | 89.5 | 89.1 | 91.0 |
| Trial-2 (g) | 87.9 | 90.5 | 86.1 | 87.0 | 89.7 | 89.4 |
| Trial-3 (g) | 89.7 | 88.5 | 83.7 | 90.6 | 91.0 | 89.6 |
| Trial-4 (g) | 89.9 | 90.0 | 86.5 | 91.4 | 90.6 | 90.0 |
| Average | 89.2 | 90.1 | 85.8 | 89.6 | 90.1 | 90.0 |
| Ratio | 89.2% | 90.1% | 85.8% | 89.6% | 90.1% | 90.0% |

The results of the Yield of cooking process [microwave machine] is given in the table below.

| | CTR [R:F=90:10] | CTR [R:F=80:20] | CTR [R:F=70:30] | Native Pea [R:F=70:30] | Low cross linked pea starch [R:F=70:30] | LI4000 [R:F=70:30] |
|---|---|---|---|---|---|---|
| Initial-1 (g) | 87.73 | 89.1 | 85.7 | 88.4 | 89.1 | 89.0 |
| Microwaved-1 (g) | 84.94 | 85.1 | 81.2 | 84.2 | 85.3 | 85.9 |
| Yield-1 | 96.82% | 95.51% | 94.8% | 95.2% | 95.8% | 96.5% |
| Initial-2 (g) | 86.54 | 87.48 | 82.7 | 88.8 | 90.1 | 89.4 |
| Microwaved-2 (g) | 82.32 | 83.87 | 78.0 | 84.3 | 86.2 | 86.9 |
| Yield-2 | 95.12% | 95.87% | 94.3% | 94.9% | 95.6% | 97.2% |
| Average | 95.97% | 95.69% | 94.6% | 95.1% | 95.7% | 96.9% |

The Total yield calculated by using production yield and cooking yield is the following.

| | CTR [R:F=90:10] | CTR [R:F=80:20] | CTR [R:F=70:30] | Native Pea [R:F=70:30] | Low cross linked pea starch [R:F=70:30] | LI4000 [R:F=70:30] |
|---|---|---|---|---|---|---|
| Yield of production process | 89.2% | 90.1% | 85.8% | 89.6% | 90.1% | 90.0% |
| Yield of cooking process | 96.0% | 95.7% | 94.6% | 95.1% | 95.7% | 96.9% |
| Total yield | 85.6% | 86.2% | 81.2% | 85.2% | 86.2% | 87.2% |

The hardness of the finished products is influenced by the proportion of red meat and fat. A higher proportion of red meat improves the texture/hardness of the ground beef. However, the market price of red meat is higher than that of fat. Therefore, increasing the proportion of red meat increases the cost.

The inventors have found here that the use of pea starch or specific modified pea starch also enables to increase the hardness of the finished products.

The texture of the product obtained with pea starch or its cross-linked derivatives is similar to that of the product made with a higher proportion of red meat. This clearly indicates that pea starch and its cross-linked derivatives can improve the texture without the need to change the proportion of red meat and fat in the product.

*Impact of different types of starch (pea versus tapioca) on hamburger steak when the ratio "red meat" to "fat" varies*

The results of the comparison of the texture of hamburger steak with native and chemically modified starches are given in the following table and presented in the Fig.4 (Hardness).

| | Native Tapioca [R:F=90:10] | Native Tapioca [R:F=80:20] | Native Tapioca [R:F=70:30] | Native Pea [R:F=70:30] | Low cross linked pea starch [R:F=70:30] | LI4000 [R:F=70:30] |
|---|---|---|---|---|---|---|
| Trial-1 (N) | 13.0 | 13.5 | 8.9 | 12.7 | 10.8 | 11.7 |
| Trial-2 (N) | 11.9 | 11.0 | 7.7 | 13.0 | 11.7 | 13.0 |
| Trial-3 (N) | 13.3 | 11.3 | 10.7 | 14.7 | 12.9 | 12.7 |
| Trial-4 (N) | 13.9 | 9.4 | 6.9 | 7.7 | 11.5 | 8.9 |
| Trial-5 (N) | 13.6 | 12.9 | 8.7 | 10.6 | 11.6 | 10.2 |
| Trial-6 (N) | 14.2 | 9.7 | 9.2 | 12.8 | 10.7 | 10.8 |
| Trial-7(N) | 11.5 | 13.3 | | | | |
| Trial-8 (N) | 13.3 | 12.0 | | | | |
| Average | 13.1 | 11.6 | 8.7 | 11.9 | 11.5 | 11.2 |
| STD | 0.9 | 1.6 | 1.3 | 2.4 | 0.8 | 1.6 |

With tapioca starch, the texture of hamburger steak can be improved only by changing the ratio of red meat and fat, because tapioca starch does not have the unique character of pea starch. In the case of native tapioca starch, to achieve the same texture as ground steak with native pea starch, it is necessary to increase the proportion of red meat by about 10%.

This shows a significant advantage of pea starch and its cross-linked derivatives over tapioca starches.

It can therefore be stated that pea starch, especially native or cross-linked pea starch, imparts an interesting texture to the meat product.

To increase the yield of the production, the use of starch is a common way.

However, the commonly used starch, potato and tapioca, causes a decrease in hardness and an increase in viscosity of the final product texture. In this case, the texture quality of the final product is therefore insufficient.

On the contrary, the production yield can be increased without increasing the stickiness of the final product, by using native or cross-linking modified pea starch.

To produce a superior product with a superior texture, the proportion of red meat in all meat ingredients must be increased.

In contrast, pea starch and its derivatives can improve texture without increasing the proportion of red meat. Therefore, pea starch can provide better texture without changing the cost of the meat ingredients.

### Example 3: technical advantage of using cross-linked starch instead of native pea starch in meat products

### Ingredients tested:

- Native potato starch produced by TOYATAKAHASHI.
- Low cross-linked potato starch commercialized by the Applicant under the name CLEARAM^{®} PI10 with a gelatinization temperature of 65.9°C.
- Native pea starch commercialized by the Applicant under the name Pea Starch N-735.
- Low cross-linked pea starch, produced classically, from a starch slurry treated with 0.0385% w/w STMP, with its phosphorus content is 5 mg to 10 mg per kg of crude starch. Its gelatinization temperature is 75.4°C.
- High cross-linked pea starch commercialized by the Applicant under the name CLEARAM^{®} LI 4000, with a gelatinization temperature of 95°C.

### Recipe

To check the impact of types of starches.

| | | Native Pea | Low cross linked pea starch | CLEARAM LI4000 | Native Potato | CLEARAM PI10 |
|---|---|---|---|---|---|---|
| Phase A | Minced beef [Red meat] (g) | 142.8 | 142.8 | 142.8 | 142.8 | 142.8 |
| | Minced beef fat (g) | 61.2 | 61.2 | 61.2 | 61.2 | 61.2 |
| | Salt (g) | 1.7 | 1.7 | 1.7 | 1.7 | 1.7 |
| TPP phase | NUTRALYS T70S (g) | 42.5 | 42.5 | 42.5 | 42.5 | 42.5 |
| | Water (g) | 93.5 | 93.5 | 93.5 | 93.5 | 93.5 |
| Phase B | Pea starch N-735 (g) | 20.74 | | | | |
| | Low cross linked pea starch (g) | | 20.74 | | | |
| | CLEARAM LI4000 (g) | | | 20.74 | | |
| | Native Potato starch (g) | | | | 20.74 | |
| | CLEARAM PI10 (g) | | | | | 20.74 |
| | Bread crumbs (g) | 17 | 17 | 17 | 17 | 17 |
| | Water (g)s | 34 | 34 | 34 | 34 | 34 |
| Total | | 413.44 | 413.44 | 413.44 | 413.44 | 413.44 |

### Process:

- Rehydrated NUTRALYS^{®} T70S.
- Mix water and NUTRALYS^{®} T70S and store it at room temperature for 60 min.
- After 60 min, put rehydrated NUTRALYS^{®} T70S into ROBOT COUPE, then press the start button around 40 seconds.
- Making meat patty.
- Mix Phase A, Minced beef and minced beef fat and salt, by using HOBART N-50. Mix at 139 rpm for 1.5 min + 1.5 min. [3 min total]
- Add Phase B and TPP part and mix at 139 rpm for 5 min.
- Adjust the temperature of the resulting product just after mixing process, to 14°C.
- Separate the product into 100 g portions and mold the portion into the shape of a hamburger steak.
- Bake it with steam convection oven at 180°C for designated length 8.5 min, for 10 min, 10.5 min, 11 min, 11.5 min, 15 min or 20 min.
- IQF: Blast freezer, - 40°C, 1.5 hr

### Analysis methods

Yield rate of meat patty

### - After baking

Weight the patty after baking. Calculate yield rate: weight after baking / 100 g (before baking) x 100

### - After microwave

Weigh the patty before and after microwave. Calculate yield rate: weight after microwave / weight before microwave

Texture of meat patty

Texture analyzer: (Shimadzu EZ-SX)

Warm it up by microwave oven at 500W for 2min.

Put hamburger steak patty on the stage and push it with Tooth shape chip with below condition.

Condition:
Plunger: Tooth shape chip
Speed: 1mm/sec, 20mm thickness
Sample size: one hamburger steak [100g/ hamburger steak mold]

### Analysis results

### Impact of the different types of starch on hamburger steak

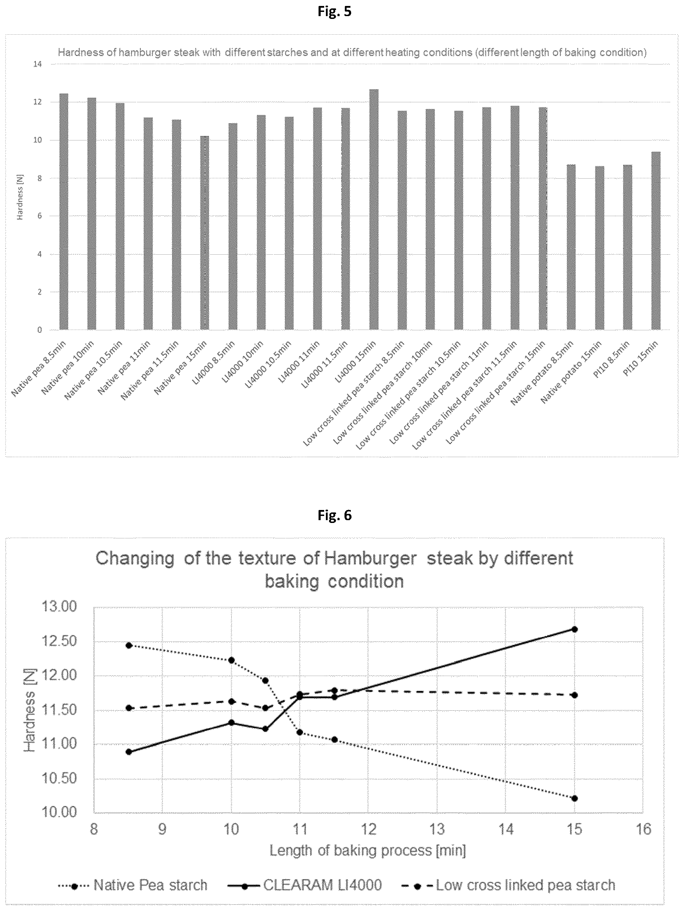

The results of the hardness are given in the following table and presented in Fig. 5.

| | Native pea 8.5min | Native pea 10min | Native pea 10.5min | Native pea 11min | Native pea 11.5min | Native pea 15min |
|---|---|---|---|---|---|---|
| Hardness [N] | 12.44 | 12.22 | 11.94 | 11.17 | 11.07 | 10.22 |
| | LI4000 8.5min | LI4000 10min | LI4000 10.5min | LI4000 11min | LI4000 11.5min | LI4000 15min |
| Hardness [N] | 10.89 | 11.32 | 11.22 | 11.69 | 11.69 | 12.68 |
| | Low cross linked pea starch 8.5min | Low cross linked pea starch 10min | Low cross linked pea starch 10.5min | Low cross linked pea starch 11min | Low cross linked pea starch 11.5min | Low cross linked pea starch 15min |
| Hardness [N] | 11.53 | 11.63 | 11.53 | 11.73 | 11.79 | 11.72 |
| | Native potato 8.5min | Native potato 15min | PI10 8.5min | PI10 15min | | |
| Hardness [N] | 8.72 | 8.64 | 8.70 | 9.37 | | |

### Impact of the baking conditions.

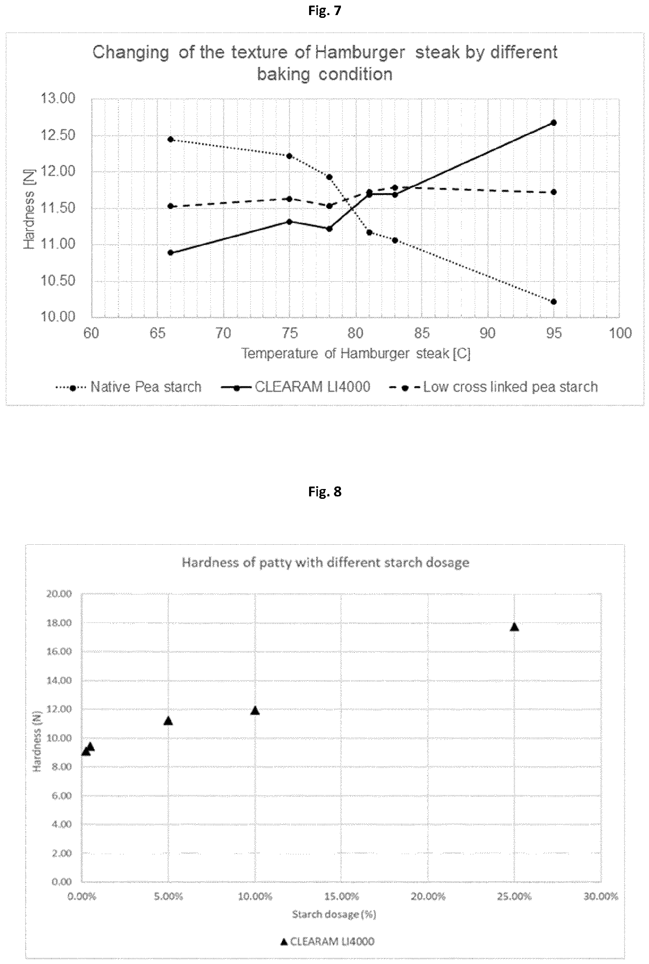

The results of the hardness are given in the following table and presented in Fig. 6 (depending on the length of baking process) and Fig. 7 (depending on the temperature of hamburger steak).

| | | | | | | |
|---|---|---|---|---|---|---|
| Length of baking process [min] | 8.5 | 10 | 10.5 | 11 | 11.5 | 15 |
| Temperature of center of product [°C] | 66 | 75 | 78 | 81 | 83 | 95 |
| Native Pea starch (N) | 12.44 | 12.22 | 11.94 | 11.17 | 11.07 | 10.22 |
| CLEARAM LI4000 (N) | 10.89 | 11.32 | 11.22 | 11.69 | 11.69 | 12.68 |
| Low cross linked pea starch (N) | 11.53 | 11.63 | 11.53 | 11.73 | 11.79 | 11.72 |

Thus, the hardness of the ground steak is changed with the prolongation of the cooking process. In other words, the texture of the ground steak is affected by the change in temperature.

In addition, this change in texture will be influenced by the type of starch used. Cross-linked starches can maintain or even improve the texture of the ground steak, unlike native starches.

In the case of native pea starch, the latter loses its function, which means that the hardness of the ground steak will be decreased when the temperature of the sample is increased to a temperature above 80°C.

On the contrary, the hardness of the ground steak with CLEARAM^{®} LI4000 highly cross-linked pea starch or low cross-linked pea starch increases with the temperature of the ground steak.

Furthermore, it is interesting to note that after the temperature exceeds 81°C, the hardness of the ground steak of CLEARAM^{®} LI4000 and the low cross-linked pea starch outperforms the texture of the native pea starch and shows its function continuously.

In conclusion, for the product that will be processed above 81°C, cross-linked pea starch is recommended as a functional ingredient, better than native pea starch.

### Example 4: comparison of meat product recipes with different amounts of cross-linked pea starch

The aim of this example is to determine the maximum amount of incorporation of cross-linked pea starch as an ingredient in meat products.

### Ingredient tested:

High cross-linked pea starch commercialized by the Applicant under the name CLEARAM^{®} LI 4000, with a gelatinization temperature of 95°C.

### Recipe:

| | | CLEARAM LI4000 | | | | | |
|---|---|---|---|---|---|---|---|
| | | 0.25% | 0.5% | 5% | 10% | 25% | 50% |
| Phase A | Minced beef [Red meat] (g) | 142.8 | 142.8 | 142.8 | 142.8 | 142.8 | 142.8 |
| | Minced beef fat (g) | 61.2 | 61.2 | 61.2 | 61.2 | 61.2 | 61.2 |
| | Salt (g) | 1.7 | 1.7 | 1.7 | 1.7 | 1.7 | 1.7 |
| TPP phase | NUTRALYS T70S (g) | 42.5 | 42.5 | 42.5 | 42.5 | 42.5 | 42.5 |
| | Water (g) | 93.5 | 93.5 | 93.5 | 93.5 | 93.5 | 93.5 |
| Phase B | CLEARAM LI4000 (g) | 0.99 | 1.98 | 20.74 | 43.9 | 130.9 | 393 |
| | Bread crumbs (g) | 17 | 17 | 17 | 17 | 17 | 17 |
| | Water (g) | 34 | 34 | 34 | 34 | 34 | 34 |
| Total | | 393.69 | 394.68 | 413.44 | 436.6 | 523.6 | 785.7 |

### Process :

- Rehydrated NUTRALYS^{®} T70S.
- Mix water and NUTRALYS^{®} T70S and store it at Room Temperature (RT) for 60 min.
- After 60 min, put rehydrated NUTRALYS^{®} T70S into ROBOT COUPE, then press the start button for around 40 seconds.
- Making meat patty.
- Mix Phase A, Minced beef and minced beef fat and salt, by using HOBART N-50. Mix at 139 rpm for 1.5 min+1.5 min. [3min total]
- Add Phase B and TPP part and mix with 139 rpm for 5 min.
- Adjust the temperature of the resulting product just after mixing process, to 14°C.
- Separate the product into 100 g portions and mould the portion into the shape of a hamburger steak.
- Bake it with steam convection oven at 180°C for 10.5 min. [ 90% dry condition.]
- IQF Blast freezer, -40C 1.5hr

### Analysis method

Texture analyzer: (Shimadzu EZ-SX)

Warm it up by microwave oven at 500W for 2 min.

Put hamburger steak patty on the stage and push it with Tooth shape chip under the following conditions.

Condition:
Plunger: Tooth shape chip
Speed: 1 mm/sec, 20 mm thickness
Sample size: one hamburger steak [100 g/ hamburger steak mold]

### Analysis results

The results of the hardness are given in following tables and in figure 8.

| starch dosage (%) | 0.25 | 0.5 | 5 | 10 | 25 |
|---|---|---|---|---|---|
| | 9.432523 | 10.3477 | 11.70088 | 12.31365 | 19.42554 |
| | 9.405787 | 9.31379 | 13.03821 | 12.31159 | 18.44839 |
| | 10.14258 | 10.0637 | 12.66893 | 11.56017 | 15.81712 |
| | 7.833751 | 10.06606 | 8.873876 | 11.85838 | 16.66873 |
| | 8.496411 | 9.322993 | 10.24125 | 11.99875 | 17.02813 |
| | 8.939664 | 9.487247 | 10.8222 | 12.08107 | 18.95733 |
| | 8.481629 | 9.498358 | | 11.44571 | |
| | 9.785223 | 9.384282 | | | |
| | 9.964482 | 7.203436 | | | |
| | 8.65639 | | | | |
| AVERAGE | 9.11 | 9.41 | 11.22 | 11.94 | 17.72 |

Therefore, the maximum dosage of starch for the production of the patty is 25%. A hamburger with 50% starch is not able to produce a patty.

### Example 5: Comparison of the properties of native and chemically modified starches (from various botanical sources) as an ingredient in a meat analogue

### Ingredients tested:

- Native potato starch produced by TOYATAKAHASHI.
- Native pea starch commercialized by the Applicant under the name Pea Starch N-735.
- Native tapioca starch, produced by UTC
- Native maize starch commercialized by the Application under this same name.
- Low acetylated pea starch commercialized by the Applicant under the name CLEARAM^{®} LG0005. Its acetyl value is between 0.25 % and 0.5 %. Its gelatinized temperature is 72.95°C.
- High acetylated pea starch commercialized by the Applicant under the name CLEARAM^{®} LG0020. Its acetyl value is 1.9, its substitution Degree is 0.071 and its gelatinization temperature is 67.9°C.
- Low cross-linked potato starch commercialized by the Applicant under the name CLEARAM^{®} PI10 with a gelatinization temperature of 65.9°C.
- Low cross-linked pea starch, produced classically, from a starch slurry treated with 0.0385% w/w STMP, so that its phosphorus content is 5 mg to 10 mg per kg of crude starch. Its gelatinization temperature is 75.4°C.
- High cross-linked pea starch commercialized by the Applicant under the name CLEARAM^{®} LI 4000, with a gelatinization temperature of 95°C.

### Recipes and process

*To test the impact of the botanical origin of starch*

| | CTR | Native Maize | Native Tapioca | Native Pea | Native Potato |
|---|---|---|---|---|---|
| Water (g) | 159 | 159 | 159 | 159 | 159 |
| NUTRALYS T70S (g) | 67.5 | 67.5 | 67.5 | 67.5 | 67.5 |
| Crushed ice (g) | 13.5 | 13.5 | 13.5 | 13.5 | 13.5 |
| Methylcellulose (g) | 6 | 6 | 6 | 6 | 6 |
| NUTRALYS F85F (g) | 15 | 15 | 15 | 15 | 15 |
| Sunflower oil (g) | 18.6 | 18.6 | 18.6 | 18.6 | 18.6 |
| Melted Coconut oil (g) | 12.3 | 12.3 | 12.3 | 12.3 | 12.3 |
| Garlic powder (g) | 0.9 | 0.9 | 0.9 | 0.9 | 0.9 |
| Black pepper (g) | 0.24 | 0.24 | 0.24 | 0.24 | 0.24 |
| Salt (g) | 0.6 | 0.6 | 0.6 | 0.6 | 0.6 |
| Water (g) | 63 | 45 | 45 | 45 | 45 |
| Maize starch standard (g) | | 18 | | | |
| Native tapioca starch (g) | | | 18 | | |
| Pea starch N-735 (g) | | | | 18 | |
| Native potato starch (g) | | | | | 18 |
| Total | 356.64 | 356.64 | 356.64 | 356.64 | 356.64 |

NUTRALYS^{®} F85F is a functional yellow pea protein commercialized by the applicant. *To test the impact of the chemical modification*

| | Native Pea | CLEARAM LG0005 | CLEARAM LG0020 | Low cross linked pea starch | Native Potato | CLEARAM PI10 |
|---|---|---|---|---|---|---|
| Water (g) | 159 | 159 | 159 | 159 | 159 | 159 |
| NUTRAKYS T70S (g) | 67.5 | 67.5 | 67.5 | 67.5 | 67.5 | 67.5 |
| Crushed ice (g) | 13.5 | 13.5 | 13.5 | 13.5 | 13.5 | 13.5 |
| Methylcellulose (g) | 6 | 6 | 6 | 6 | 6 | 6 |
| NUTRALYS F85F (g) | 15 | 15 | 15 | 15 | 15 | 15 |
| Sunflower oil (g) | 18.6 | 18.6 | 18.6 | 18.6 | 18.6 | 18.6 |
| Melted Coconut oil (g) | 12.3 | 12.3 | 12.3 | 12.3 | 12.3 | 12.3 |
| Garlic powder (g) | 0.9 | 0.9 | 0.9 | 0.9 | 0.9 | 0.9 |
| Black pepper (g) | 0.24 | 0.24 | 0.24 | 0.24 | 0.24 | 0.24 |
| Salt (g) | 0.6 | 0.6 | 0.6 | 0.6 | 0.6 | 0.6 |
| Water (g) | 45 | 45 | 45 | 45 | 45 | 45 |
| Pea starch N-735 (g) | 18 | | | | | |
| CLEARAM LG0005 (g) | | 18 | | | | |
| CLEARAM LG0020 (g) | | | 18 | | | |
| Low cross linked pea starch (g) | | | | 18 | | |
| Native potato starch (g) | | | | | 18 | |
| CLEARAM PI10 (g) | | | | | | 18 |
| Total | 356.64 | 356.64 | 356.64 | 356.64 | 356.64 | 356.64 |

*To test the impact of cross-linking and water content*

| | CTR - 10% | CTR -5% | CTR | Native Pea | Low cross linked pea starch | CLEARA M LI4000 |
|---|---|---|---|---|---|---|
| Water (g) | 159 | 159 | 159 | 159 | 159 | 159 |
| NUTRAKYS T70S (g) | 67.5 | 67.5 | 67.5 | 67.5 | 67.5 | 67.5 |
| Crushed ice (g) | 13.5 | 13.5 | 13.5 | 13.5 | 13.5 | 13.5 |
| Methylcellulose (g) | 6 | 6 | 6 | 6 | 6 | 6 |
| NUTRALYS F85F(g) | 15 | 15 | 15 | 15 | 15 | 15 |
| Sunflower oil (g) | 18.6 | 18.6 | 18.6 | 18.6 | 18.6 | 18.6 |
| Melted Coconut oil (g) | 12.3 | 12.3 | 12.3 | 12.3 | 12.3 | 12.3 |
| Garlic powder (g) | 0.9 | 0.9 | 0.9 | 0.9 | 0.9 | 0.9 |
| Black pepper (g) | 0.24 | 0.24 | 0.24 | 0.24 | 0.24 | 0.24 |
| Salt (g) | 0.6 | 0.6 | 0.6 | 0.6 | 0.6 | 0.6 |
| Water (g) | 33 | 48 | 63 | 45 | 45 | 45 |
| Pea starch N-735 (g) | | | | 18 | | |
| Low cross linked pea starch (g) | | | | | 18 | |
| CLEARAM LI4000 (g) | | | | | | 18 |
| Total | 326.64 | 341.64 | 356.64 | 356.64 | 356.64 | 356.64 |

### Process :

- Rehydrated NUTRALYS^{®} T70S.
- Mix water and NUTRALYS^{®} T70S and store it at RT for 60 min.
- After 60 min, put rehydrated NUTRALYS^{®} T70S into ROBOT COUPE, then press the start button around 40 seconds.
- Making meat free patty.
- Add Rehydrated TPP, oil part, water and powder part without Methylcellulose into Mixer, HOBART and mix for 5 min in a chill room.
- Meanwhile, mix the methylcellulose and the crushed ice, and store for 5 min in the freezer.
- Add methylcellulose and mix for 3.5 min in a chill room.
- Put the paste into 80 grams molds.
- Steam the portion at 98°C for 10 min.
- IQF Blast freezer, - 40°C 1.5 hr

### Analysis method

### Yield rate of meat free patty

### - After baking

Weight the patty after baking. Calculate yield rate: weight after baking / 100 g (before baking) x 100

### - After microwave

Weigh the patty before and after microwave. Calculate yield rate: weight after microwave / weight before microwave

### Texture of meat free patty

Texture analyzer: (Shimadzu EZ-SX)

Warm it up by microwave oven at 500 W for 2 min.

Cut a 2 cm thick hamburger steak patty and put the cross section facing up on the stage, and push it with cylinder chip under the following conditions.

Condition:
Plunger: 2cm cylinder chip
Speed: 1 mm/sec, 2 times
Sample size: 2 cm thick hamburger steak [100 g/ hamburger steak mold]

### Sensory evaluation of patty texture

### Number of panelists: 3

All the samples were tested at one time and scored. The lowest score is -3, and the best score is 3.

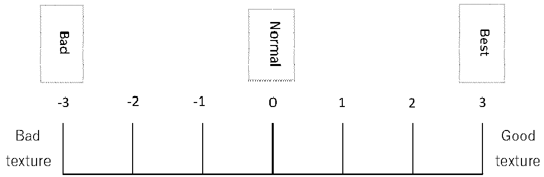

### Analysis results

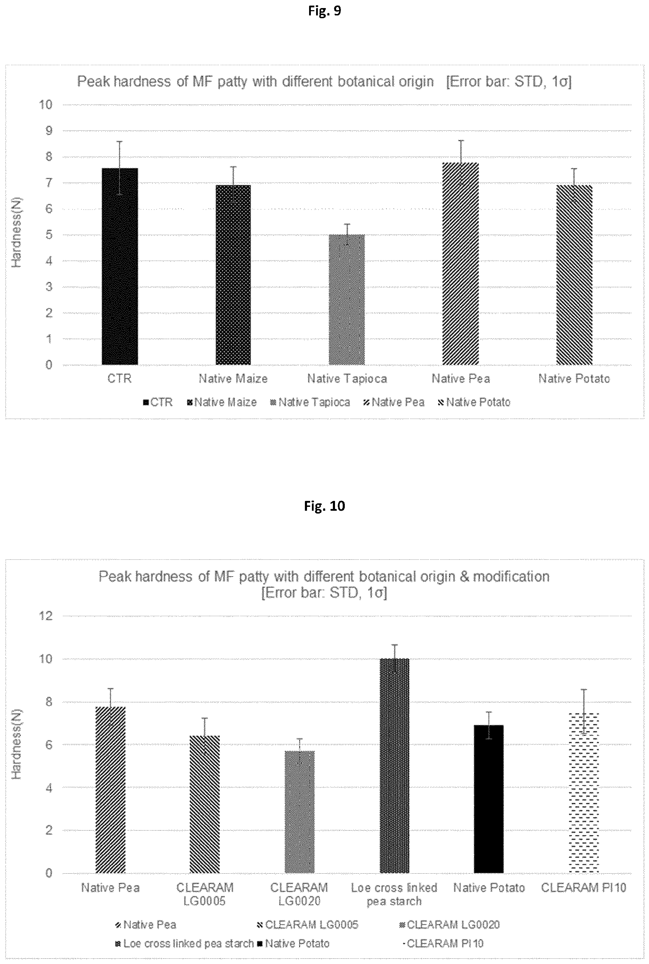

The results of the impact of botanical origin of starch in meat-free product, is given in the following tables and in Fig. 9.

### Evaluation of hardness

| | CTR | Native Maize | Native Tapioca | Native Pea | Native Potato |
|---|---|---|---|---|---|
| AVERAGE (N) | 7.55 | 6.92 | 5.00 | 7.75 | 6.90 |
| STDEV | 1.01 | 0.70 | 0.41 | 0.85 | 0.63 |

### Result of yield of process

| | CTR | Native Maize | Native Tapioca | Native Pea | Native Potato |
|---|---|---|---|---|---|
| Yield of steaming process | 99% | 105% | 105% | 105% | 105% |
| *Yield of cooking* process | 96% | 97% | 97% | 98% | 97% |
| Yield of total process | 95% | 102% | 102% | 103% | 102% |

### Sensory evaluation

| | | Native Maize | Native Tapioca | Native Pea | Native Potato |
|---|---|---|---|---|---|
| Sensory evaluation | Panel 1 | -1.8 | -1.8 | -1.3 | -2.3 |
| | Panel 2 | 0.0 | -2.0 | 1.0 | -1.0 |
| | Panel 3 | 0.3 | -3.0 | 1.0 | -1.0 |
| | Average | -0.5 | -2.3 | 0.2 | -1.4 |

The product with pea starch showed the highest hardness, compared to the products with starch of other origins.

Moreover, only the product with native pea obtained the score, higher than "0".

The results of the impact of modification of starch in meat free product, is given in the following tables and in Fig. 10.

### Result of evaluation of the hardness

| | Native Pea | CLEARAM LG0005 | CLEARAM LG0020 | Low cross linked pea starch | Native Potato | CLEARAM PI10 |
|---|---|---|---|---|---|---|
| AVERAGE (N) | 7.70 | 6.54 | 5.60 | 9.94 | 6.90 | 7.53 |
| STDEV | 0.70 | 0.50 | 0.41 | 0.43 | 0.63 | 1.03 |

### Result of yield process

| | Native Pea | CLEARAM LG0005 | CLEARAM LG0020 | CLEARAM LI4000 |
|---|---|---|---|---|
| Yield of steaming process | 105% | 105% | 105% | 105% |
| Yield of cooking process | 98% | 97% | 97% | 97% |
| Yield of total process | 103% | 102% | 102% | 102% |

Cross-linking is preferred to obtain a harder texture and does not have significant negative impact on yield.

The product with cross-linked pea starch has a significantly higher hardness than the one with potato starch.

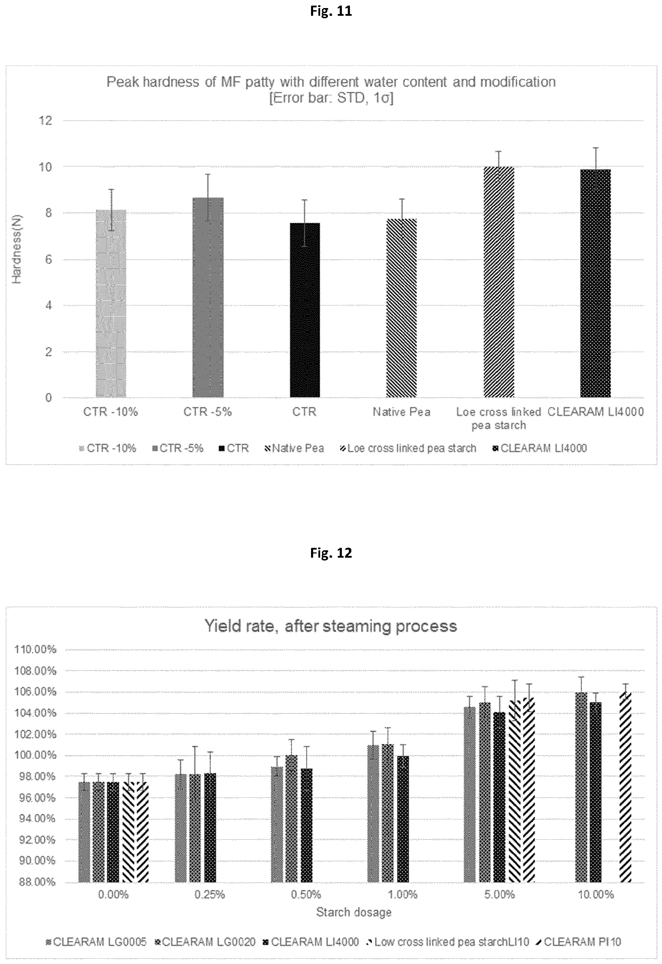

The results of the impact of the modification level of starch and water content of meat free patty are given in the following tables and in Fig. 11.

### Results of evaluation of the hardness

| | CTR - 10% | CTR - 5% | CTR | Native Pea | Low cross linked pea starch | CLEARAM LI4000 |
|---|---|---|---|---|---|---|
| AVERAGE (AVE) | 8.13 | 8.68 | 7.55 | 7.70 | 9.94 | 9.90 |
| STDEV | 0.88 | 1.00 | 1.01 | 0.70 | 0.43 | 0.91 |

### Results of yield process

| | CTR - 10% | CTR - 5% | CTR | Native Pea | Low cross linked pea starch | CLEARAM LI4000 |
|---|---|---|---|---|---|---|
| Yield of steaming process | 102% | 100% | 99% | 105% | 105% | 104% |
| Yield of cooking process | 96% | 95% | 96% | 98% | 97% | 98% |
| Yield of total process | 98% | 95% | 95% | 103% | 102% | 102% |

The product with the cross-linked pea starch showed significantly better hardness than that with the native pea starch.

In addition, the same texture was observed for the meat free patty, containing cross-linked pea starch, and the meat free patty, in which the water content was reduced. This clearly shows that the addition of cross-linked pea starch can mimic the texture of meat free products, which have a lower water content.

Therefore, the use of cross-linked pea starch can improve the texture of the meat free product and can mimic the meat free product, which has been made according to a premium recipe, and in which less water has been used.

### Example 6: Comparison of two different chemically modified pea starches as an ingredient in a meat analogue

Here was tested the effect of acetylated and cross-linked pea starch as an ingredient in a meat analogue, to confirm that the cross-linking modification is the best way to achieve the best result.

Elements are also given to determine the best dosage to follow.

### Ingredients tested:

- Low acetylated pea starch commercialized by the Applicant under the name CLEARAM^{®} LG0005. Its acetyl value is between 0,25 % and 0,5 %. Its gelatinized temperature is 72.95°C.
- High acetylated pea starch commercialized by the Applicant under the name CLEARAM^{®} LG0020. Its acetyl value is 1.9, its substitution Degree is 0.071 and its gelatinization temperature is 67.9°C.
- Low cross-linked potato starch commercialized by the Applicant under the name CLEARAM^{®} PI10 with a gelatinization temperature of 65.9°C,
- Low cross-linked pea starch, produced classically, from a starch slurry treated with 0.0385% w/w STMP, so that its phosphorus content is 5 mg to 10 mg per kg of crude starch. Its gelatinization temperature is 75.4°C.
- High cross-linked pea starch commercialized by the Applicant under the name CLEARAM^{®} LI 4000, with a gelatinization temperature of 95°C.

### Recipe

### Emulsion curd recipe

| | |
|---|---|
| methyl cellulose (g) | 15 |
| Canola oil (g) | 225 |
| Ice water (g) | 210 |
| Water (g) | 300 |
| Total | 750 |

Rehydrated NUTRALYS^{®} T70S recipe

Meat free (textured pea protein) patty recipe

| | |
|---|---|
| NUTRALYS T70S (g) | 312 |
| Water (g) | 844 |
| Total | 1156 |

Meat free (textured pea protein) patty recipe

| | CTR | Test-1 | Test-2 | Test-3 | Test-4 | Test-5 | Test-6 | Test-7 | Test-8 | Test-9 |
|---|---|---|---|---|---|---|---|---|---|---|
| NUTRALYS^{®} S85F (g) | 66.67 | 66.67 | 66.67 | 66.67 | 66.67 | 66.67 | 66.67 | 66.67 | 66.67 | 66.67 |
| Emulsion curd (g) | 250 | 250 | 250 | 250 | 250 | 250 | 250 | 250 | 250 | 250 |
| Rehydrated NUTRALYS^{®} T70S (g) | 192.67 | 192.67 | 192.67 | 192.67 | 192.67 | 192.67 | 192.67 | 192.67 | 192.67 | 192.67 |
| NaCl (g) | 4.53 | 4.53 | 4.53 | 4.53 | 4.53 | 4.53 | 4.53 | 4.53 | 4.53 | 4.53 |
| Monosodium glutamate (MSG) (g) | 2.5 | 2.5 | 2.5 | 2.5 | 2.5 | 2.5 | 2.5 | 2.5 | 2.5 | 2.5 |
| CLEARAM^{®} LG0020 (g) | - | 1.27 | 2.6 | 5.2 | 27.2 | 57.5 | - | - | - | - |
| CLEARAM^{®} LG0005 (g) | - | - | - | - | - | - | 1.25 | 2.6 | 5.2 | 27.2 |
| Total | 516.37 | 517.64 | 518.97 | 521.57 | 543.57 | 573.87 | 517.64 | 518.97 | 521.57 | 543.57 |
| Starch dosage | 0% | 0.25% | 0.5% | 1% | 5% | 10% | 0.25% | 0.5% | 1% | 5% |

| | Test-10 | Test-12 | Test-13 | Test-14 | Test-15 | Test-16 | Test-17 | Test-18 |
|---|---|---|---|---|---|---|---|---|
| NUTRALYS^{®} S85F (g) | 66.67 | 66.67 | 66.67 | 66.67 | 66.67 | 66.67 | 66.67 | 66.67 |
| Emulsion curd (g) | 250 | 250 | 250 | 250 | 250 | 250 | 250 | 250 |
| Rehydrated NUTRALYS^{®} T70S (g) | 192.67 | 192.67 | 192.67 | 192.67 | 192.67 | 192.67 | 192.67 | 192.67 |
| NaCl (g) | 4.53 | 4.53 | 4.53 | 4.53 | 4.53 | 4.53 | 4.53 | 4.53 |
| MSG (g) | 2.5 | 2.5 | 2.5 | 2.5 | 2.5 | 2.5 | 2.5 | 2.5 |
| CLEARAM^{®} LI4000 (g) | 1.27 | 2.6 | 5.2 | 27.2 | 57.5 | - | - | - |
| Low cross linked pea starch (g) | - | - | - | - | - | 27.2 | - | - |
| CLEARAM^{®} PI10 (g) | - | - | - | - | - | - | 27.2 | 57.5 |
| Total | 517.64 | 518.97 | 521.57 | 543.57 | 573.87 | 543.57 | 543.57 | 573.87 |
| Starch dosage | 0.25% | 0.5% | 1% | 5% | 10% | 5% | 5% | 10% |

### Process :

- Emulsion recipe
- Disperse methyl cellulose into liquid vegetable oil.
- Prepare ice + water in the mixer, ROBOT COUPE.
- Add that mixed oil into ROBOT COUPE, during mixing.
- Mix that with Hobart for 1 min and mix well with Spatula. After that mix 1 min and mix with spatula and mix for 3 min as total mixing time.
- Store that emulsion in the refrigerator.
- Rehydrated NUTRALYS^{®} T70S
- All the water and mix with NUTRALYS^{®} T70S, and store it at Room Temperature for 60 min.
- After 60 min, put rehydrated NUTRALYS^{®} T70S into ROBOT COUPE, then press the start button around 40 times, in order to cut the NUTRALYS^{®} T70S.
- Making meat free patty.
- Add Pea protein powder, Emulsion, Rehydrated NUTRALYS^{®} T70S, NaCl, MAG and Starch, into Mixer, HOBART.
- Mix them dial 1 for 3 min.
- Put the paste into 80 grams molds.
- Steam it at 98°C for 10min.
- IQF

### Analysis method

Texture analyzer: (Shimadzu EZ-SX)

Warm it up by microwave oven at 500W for 2min.

Put hamburger steak patty on the stage and push it with ball type chip under the following conditions.

Condition:
Plunger: ½ inc (1.27 cm) ball shape chip
Speed: 1mm/sec
Sample size: 1 meal [80g/ hamburger steak mold]

### Analysis results

### Impact of types and quantities of starch [Process yield]

Comparison was made difference between LG0020, LG0005, Low acetylated Pea starch, LI4000 and PI10.

Weight changing before and after steaming process.

Weight changing before and after microwave reheated process.

Results of yield rate after steam presented in the following tables and in Fig. 12.

| | CTR | Test-1 LG0020 0.25% | Test-2 LG0020 0.5% | Test-3 LG0020 1% | Test-4 LG0020 5% | Test-5 LG0020 10% | Test-6 LG0005 0.25% | Test-7 LG0005 0.5% | Test-8 LG0005 1% | Test-9 LG0005 5% |
|---|---|---|---|---|---|---|---|---|---|---|
| | 97.58% | 98.08% | 100.84% | 101.01% | 103.58% | 105.59% | 97.50% | 98.98% | 101.63% | 104.56% |
| | 97.89% | 95.83% | 100.56% | 100.16% | 104.99% | 104.89% | 98.88% | 99.31% | 101.66% | 103.74% |
| | 97.23% | 98.93% | 100.40% | 101.04% | 105.61% | 105.95% | 98.91% | 98.83% | 100.79% | 104.73% |
| | 97.16% | 99.19% | 98.93% | 100.21% | 105.29% | 107.21% | 98.06% | 98.11% | 99.89% | 105.15% |
| | 98.01% | 98.60% | 99.36% | 101.90% | 105.10% | 105.96% | 98.59% | 99.03% | 101.18% | 104.35% |
| | 96.99% | 99.00% | 100.13% | 101.99% | 105.59% | 106.03% | 97.41% | 99.48% | 100.63% | 104.96% |
| AVERAGE | 97.48% | 98.27% | 100.04% | 101.05% | 105.03% | 105.94% | 98.23% | 98.95% | 100.96% | 104.58% |
| 2 STDEV | 0.83% | 2.52% | 1.48% | 1.57% | 1.51% | 1.51% | 1.34% | 0.95% | 1.35% | 1.00% |

| | Test-10 LI4000 0.25% | Test-12 LI4000 0.5% | Test-13 LI4000 1% | Test-14 LI4000 5% | Test-15 LI4000 10% | Test-16 Low cross linked pea starch 5% | Test-17 PI10 5% | Test-18 PI10 10% |
|---|---|---|---|---|---|---|---|---|
| | 98.49% | 98.35% | 100.23% | 104.63% | 105.05% | 104.88% | 104.30% | 105.99% |
| | 98.75% | 97.60% | 99.90% | 103.54% | 104.75% | 106.70% | 105.43% | 105.46% |
| | 98.66% | 98.79% | 99.05% | 105.00% | 105.89% | 105.28% | 105.81% | 106.25% |
| | 96.48% | 100.58% | 99.65% | 103.31% | 104.74% | 103.76% | 106.16% | 105.98% |
| | 99.50% | 99.10% | 100.55% | 104.60% | 104.59% | 104.89% | 105.88% | 106.51% |
| | 98.08% | 98.08% | 100.19% | 103.50% | 105.01% | 105.59% | 105.09% | 106.05% |
| AVE | 98.33% | 98.75% | 99.93% | 104.10% | 105.00% | 105.18% | 105.44% | 106.04% |
| 2 STDEV | 2.04% | 2.08% | 1.06% | 1.45% | 0.93% | 1.93% | 1.35% | 0.70% |

It was found that the higher the starch dosage, the higher the yield.

Results of yield rate after microwave reheated.

| | CTR | Test-1 LG0020 0.25% | Test-2 LG002 0 0.5% | Test-3 LG002 0 1% | Test-4 LG002 0 5% | Test-5 LG002 0 10% | Test-6 LG000 5 0.25% | Test-7 LG000 5 0.5% | Test-8 LG000 5 1% | Test-9 LG000 5 5% |
|---|---|---|---|---|---|---|---|---|---|---|
| | 93.80% | 93.97% | 93.08% | 95.50% | 95.30% | 96.23% | 94.21% | 94.62% | 95.38% | 95.02% |
| | 92.64% | 94.86% | 93.35% | 95.04% | 95.62% | 95.85% | 92.78% | 94.10% | 94.62% | 96.14% |
| | 94.15% | 94.50% | 93.73% | 94.42% | | | | | | 96.02% |
| AVE | 93.53% | 94.44% | 93.39% | 94.99% | 95.46% | 96.04% | 93.50% | 94.36% | 95.00% | 95.73% |
| 2STD | 1.58% | 0.90% | 0.65% | 1.09% | 0.46% | 0.54% | 2.03% | 0.74% | 1.07% | 1.23% |

| | Test-10 LI4000 0.25% | Test-12 LI4000 0.5% | Test-13 LI4000 1% | Test-14 LI4000 5% | Test-15 LI4000 10% | Test-16 Low cross linked pea starch 5% | Test-17 PI10 5% | Test-18 PI10 10% |
|---|---|---|---|---|---|---|---|---|
| | 94.35% | 95.35% | 94.47% | 96.80% | 96.47% | 95.89% | 96.35% | 96.60% |
| | 95.20% | 92.87% | 96.14% | 96.18% | 96.75% | 96.05% | 95.89% | 95.28% |
| | 94.98% | | 95.60% | 96.26% | | 97.00% | | 96.20% |
| AVE | 94.84% | 94.11% | 95.40% | 96.41% | 96.61% | 96.31% | 96.12% | 96.03% |
| 2STDEV | 0.88% | 3.51% | 1.71% | 0.67% | 0.39% | 1.20% | 0.66% | 1.36% |

It was found that the higher the starch dosage, the higher the yield.

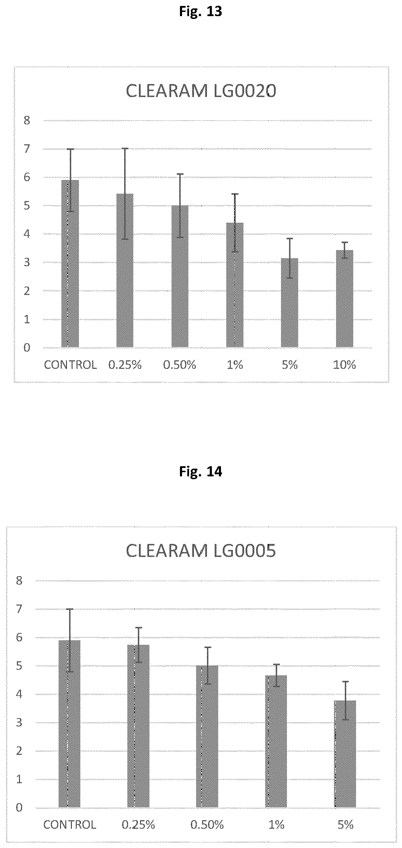

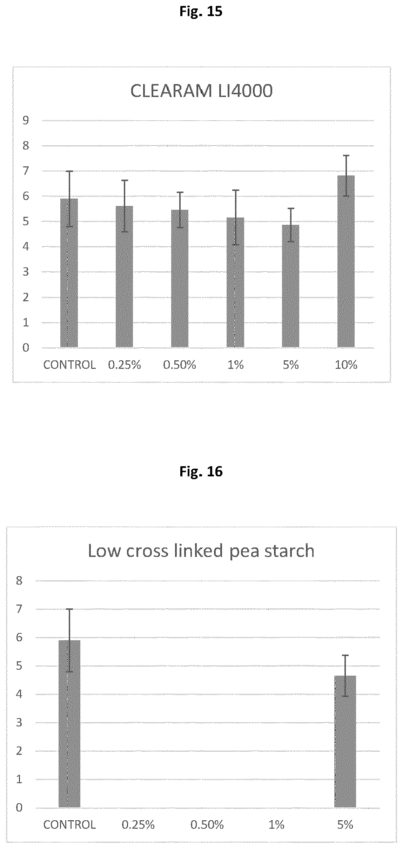

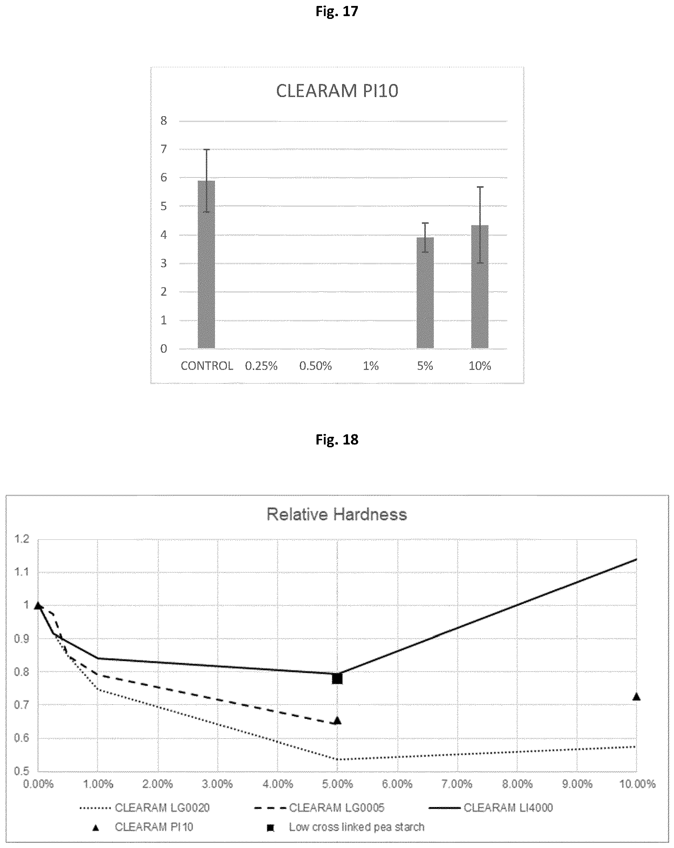

The impact of types and dosage of starch are presented in the following tables and Figures 13 to 18.

| | CTR | Test-1 LG0020 0.25% | Test-2 LG0020 0.5% | Test-3 LG0020 1% | Test-4 LG0020 5% | Test-5 LG0020 10% | Test-6 LG0005 0.25% | Test-7 LG0005 0.5% | Test-8 LG0005 1% | Test-9 LG0005 5% |
|---|---|---|---|---|---|---|---|---|---|---|
| (N) | 5.470578 | 6.267039 | 5.802711 | 4.292488 | 3.814729 | 3.667068 | 5.608384 | 4.999097 | 4.694303 | 3.921 |
| (N) | 5.879911 | 5.172475 | 5.033366 | 3.541787 | 3.023402 | 3.439236 | 5.43642 | 4.71743 | 4.556242 | 4.175726 |
| (N) | 6.800397 | 6.363741 | 5.44138 | 3.790633 | 3.121964 | 3.401438 | 5.778154 | 5.205059 | 4.91972 | 3.485378 |
| (N) | 5.907822 | 4.784711 | 4.673036 | 4.471572 | 2.782917 | 3.317213 | 5.518278 | 5.022112 | 4.724804 | 3.377724 |
| (N) | 5.436865 | 5.475823 | 5.389961 | 4.498657 | 3.037723 | 3.28145 | 5.803076 | 4.615005 | 4.402574 | 3.946416 |
| (N) | | 4.815865 | 4.57565 | 4.862404 | 3.163846 | 3.516245 | 6.290356 | 5.509869 | | |
| (N) | | 4.512787 | 4.725377 | 5.225182 | | | | | | |
| (N) | | 6.609789 | 4.011583 | 4.311514 | | | | | | |
| (N) | | 4.780992 | 5.367088 | 4.577875 | | | | | | |
| AVE | 5.899115 | 5.420358 | 5.002239 | 4.396901 | 3.15743 | 3.437108 | 5.739111 | 5.011429 | 4.659529 | 3.781249 |
| 2STD | 1.100033 | 1.594999 | 1.110499 | 1.016956 | 0.696215 | 0.281461 | 0.611206 | 0.651023 | 0.387122 | 0.6729 |

| | Test-10 LI4000 0.25% | Test-12 LI4000 0.5% | Test-13 LI4000 1% | Test-14 LI4000 5% | Test-15 LI4000 10% | Test-16 Low cross linked pea starch 5% | Test-17 PI10 5% | Test-18 PI10 10% |
|---|---|---|---|---|---|---|---|---|
| (N) | 6.184467 | 5.602312 | 4.70643 | 5.081733 | 6.850497 | 4.239464 | 3.778172 | 3.551881 |
| (N) | 4.694986 | 5.575848 | 4.472987 | 4.338392 | 6.137594 | 4.930004 | 3.627539 | 3.982194 |
| (N) | 6.167682 | 5.137062 | 4.915587 | 4.787048 | 6.882795 | 4.217831 | 3.743919 | 3.689162 |
| (N) | 5.236451 | 5.948003 | 5.963039 | 4.411936 | 7.009634 | 4.653374 | 4.19995 | 4.575411 |
| (N) | 5.643129 | 4.973809 | 5.870549 | 5.097946 | 7.199828 | 4.42125 | 3.855133 | 5.452538 |
| (N) | 5.526511 | 5.513891 | 5.590709 | 5.256971 | | 4.934168 | 4.246584 | 3.894567 |
| (N) | 6.219085 | | 4.625368 | 4.874229 | | 4.383389 | | 4.850912 |
| (N) | 5.56736 | | 5.134583 | 4.715411 | | 4.839834 | | 4.762968 |
| (N) | 5.282942 | | 5.18508 | 5.20126 | | 5.260404 | | |
| AVE | 5.613624 | 5.458488 | 5.162704 | 4.86277 | 6.81607 | 4.653302 | 3.90855 | 4.344954 |
| 2STD | 1.026043 | 0.701645 | 1.086221 | 0.662958 | 0.806662 | 0.723331 | 0.509983 | 1.33182 |

It was therefore found that if the starch dosage is > 0.5%, the types of starch have a direct impact on the texture of the final product, in the case of a vegetable product without meat. The best starch dosage for patties is 5%.

Regarding starch modification, the product with cross-linked starch is harder and less sticky than the one with acetylated starch.

With respect to cross-linked starch, the higher the modification, the harder the texture of the product containing this starch.

For acetylated starch, the higher the modification, the lower the hardness of the starch product.

Therefore, in the technical field of meat free products, CLEARAM^{®} LI4000 starch is the best choice.

Furthermore, the comparison between CLEARAM^{®} PI10 and low cross-linked pea starch also shows that the hardness of the product containing pea starch is initially higher than that of the product with potato starch, which confirms the advantage of promoting pea starch.

## Claims

1. Use of native or cross-linked leguminous starches as food texture improver for meat or free meat products.

2. The Use according to claim 1, **characterized in that** the leguminous starch is chosen from the group consisting of pea starch, fava bean starch, haricot bean starch, broad bean starch, and horse bean starch, more preferably is pea starch or faba bean starch.

3. The Use according to claim 1 or 2, **characterized in that** the cross-linked starch is a high cross-linked starch.

4. The Use according to claim 3, **characterized in that** the high cross-linked starch is distarch phosphate.

5. The Use according to claim 4, **characterized in that** the high cross-linked starch has a phosphorus content of between 130 to 150 mg per kg of crude starch.

6. The Use according to any one of claims 1 to 5, **characterized in that** the amount of pea starch or cross-linked pea starch in the meat product or the meat free product represents between 1 % to 25%, preferably between 3 to 12%, for example 5% of the total weight of the product.
